**Europäisches Patentamt**

**European Patent Office**

**Office européen des brevets**

(11) Veröffentlichungsnummer: **0 167 492**
**B1**

(12) # EUROPÄISCHE PATENTSCHRIFT

(45) Veröffentlichungstag der Patentschrift:
**28.12.88**

(51) Int. Cl.⁴: **B 23 K 20/14,** B 23 K 31/04

(21) Anmeldenummer: **85810306.2**

(22) Anmeldetag: **03.07.85**

(54) Verfahren zur Herstellung eines aus mindestens zwei Bestandteilen bestehenden Verbundkörpers.

(30) Priorität: **03.07.84 CH 3204/84**

(43) Veröffentlichungstag der Anmeldung:
**08.01.86 Patentblatt 86/2**

(45) Bekanntmachung des Hinweises auf die Patenterteilung:
**28.12.88 Patentblatt 88/52**

(84) Benannte Vertragsstaaten:
**DE FR GB IT SE**

(56) Entgegenhaltungen:
**EP-A- 0 090 658**
**WO-A-83/03565**
**DE-A- 2 732 798**
**GB-A- 759 469**
**US-A- 4 444 352**

**PATENTS ABSTRACTS OF JAPAN, Band 8, Nr. 83
(M-290)(1520), 17. April 1984; & JP - A - 59 1077 (HITACHI
SEISAKUSHO K.K.) 06.01.1984**

(73) Patentinhaber: **Vereinigte Drahtwerke AG,
Neumarktstrasse 33, CH-2501 Biel (CH)**
Patentinhaber: **Dereco Dieselmotoren Forschungs- und
Entwicklungs-AG, Schlossgasse, CH-9320 Arbon (CH)**

(72) Erfinder: **Hofer, Beat, Steinmattstrasse 25,
CH-4552 Derendingen (CH)**
Erfinder: **Zbinden, Hansueli, St. Galler Strasse 70,
CH-9320 Arbon (CH)**

(74) Vertreter: **Rochat, Daniel Jean et al, Bovard AG
Patentanwälte VSP Optingenstrasse 16,
CH-3000 Bern 25 (CH)**

EP 0 167 492 B1

## Beschreibung

Verfahren zur Herstellung eines mehrschichtigen Verbundkörpers, der einen Trägerteil, beispielsweise aus Stahl, und einen zweiten Teil aus Sinter-Hartmetall oder -Hartstoff umfasst, wonach der Trägerteil und der zweite Teil übereinander in einer gasdichtverschweissten Kapsel eingeschlossen werden und in einer heissisostatischen Presse bei einer Temperatur von mindestens 800°C und mehr einem isostatischen Druck von mindestens 100 bar während mindestens 30 Minuten durch Diffusion zum Verbundkörper verschweisst werden.

Das Verbinden von harten, verschleissfesten, aber spröden Werkstoffen, wie Hartmetall oder Hartstoff, die den ersten Bestandteil des Verbundkörpers bilden, mit weicheren und zäheren (meistens auch preisgünstigeren) Trägermaterialien, wie Hartmetall einer anderen Zusammensetzung als das Hartmetall des ersten Bestandteiles, Metall, oder Metallguss, die den zweiten Bestandteil des Verbundkörpers bilden, ist bereits in vielen technischen Bereichen eingeführt.

Ein kaum gelöstes Problem liegt in der unterschiedlichen linearen thermischen Ausdehnung der Materialien der einzelnen Bestandteile:

So beträgt der Ausdehnungskoeffizient von z.B.

Stahl ca. $11.10^{-6}$/K

Hartmetall ca. $5-7.10^{-6}$/K

und Keramik ca. $1,5-10 \times 10^{-6}$/K

Nach dem Verbinden entsprechend unterschiedlicher Werkstoffe, z.B. durch Löten, Sintern oder Diffusionsschweissen, entstehen beim Abkühlen sehr hohe Schubspannungen. Diese führen in vielen Fällen zu Mikro- und Makrorissen im spröden Bereich der Legierungszone oder innerhalb des härteren Werkstoffes. Deshalb drängen sich in der Serienproduktion von Verbundkörpern – beispielsweise Ventilstösseln für Verbrennungsmotoren – aufwendige Ultraschallprüfungen auf. Selbst rissfreibefundene solche Teile können später wegen der verbliebenen hohen Eigenspannungen unter betrieblicher Wechsellast einen Schaden erleiden. An Ventilstösseln führen derartige Ermüdungsvorgänge unter pulsierender Wälzpressung zu Ausbrüchen oder sogar zum Ablösen der Hartstoffplatte; damit sind teilweise auch grössere Folgeschäden verbunden.

In der deutschen Offenlegungsschrift 3208282 ist ein Verfahren zur Herstellung eines aus mindestens zwei Bestandteilen bestehenden Verbundkörpers beschrieben. Die verschiedenen Schichten eines Verbundkörpers werden hier durch ein druckloses Sintern untereinander verbunden. Bei dem drucklosen Sintern wird aber keine 100%ige Dichte des Verbundkörpers erreicht, weil an den Grenzflächen immer festigkeitsvermindernde Poren zurückbleiben. Dies ist natürlich für einen auf diese Weise hergestellten Verbundkörper nachteilig.

Dieser Erfindung lag die Aufgabe zugrunde, ein Verfahren zur Herstellung eines aus mindestens zwei Bestandteilen bestehenden Verbundkörpers vorzuschlagen, bei welchem zwecks Abbau mechanischer Spannungen in der Bindzone angeglichene Ausdehnungskoeffizienten der Materialien der beiden Bestandteile erreicht werden sollen, d.h., dass die Ausdehungskoeffizienten der Hartstoffen dem Wärmedehungsverhalten des Trägermaterials angepasst werden sollen.

Die Aufgabe wird erfindungsgemäss bei dem Verfahren nach dem Oberbegriff des Patentanspruches 1 durch die Merkmale des kennzeichnenden Teiles des Patentanspruches 1 gelöst.

In einer heissisostatischen Presse wird der Verbundkörper durch Sintern unter einer Temperatur von mindestens 800° und unter einem Gasdruck von mindestens 100 bar über eine Zeitspanne von mindestens 30 Minuten hergestellt werden. Durch die Kombination von allseitigem Gasdruck und Temperatur auf den Körper findet zwischen den Kontaktzonen der beiden Bestandteile ohne Zwischeneinlage eine Diffusion statt. Der Vorteil gegenüber einem drucklosen Sintern oder Löten ist die vollkommene Eliminierung von Poren an den Grenzflächen. Dadurch wird die Verbund- und Schubfestigkeit des hergestellten Verbundkörpers gegenüber derjenigen des im bekannten Verfahren hergestellten Verbundkörpers wesentlich erhöht.

Mit Hilfe der heissisostatischen Presse ist es weiter möglich, die Bestandteile dreidimensional zu belasten, was zu einem 100%igen Verbundkörper führt. Durch die dreidimensionale Druckbelastung können auch geometrisch schwierig gestaltete Körper (z.B. Ventilstössel für Verbrennungsmotoren) hergestellt werden.

Als Hartmetall kann z. B. eine Komposition von 88% Wolframkarbid mit 12% Kobalt als Bindemittel angeführt werden. Anstatt von Hartmetall kann auch Hartstoff verwendet werden. Als Hartstoff kann z.B. Titankarbid mit Molybdän und Nikkelbinder oder $Al_2O_3$ angeführt werden.

Das Hartmetall oder der Hartstoff als erster Bestandteil verbindet sich durch Heisspressen mit einem weicheren und zäheren, den zweiten Bestandteil bildenden Trägermaterial. Das Trägermaterial kann aus Hartmetall einer anderen Zusammensetzung als das Hartmetall des ersten Bestandteiles, Metall oder Metallguss bestehen. Die Materialien des ersten Bestandteiles haben von den Trägermaterialien unterschiedliche Ausdehungskoeffizienten, wie schon oben erwähnt wurde. Die Materialien werden in eine Kapsel gelegt, welche durch Löten oder Schweissen gasdicht abgeschlossen wird. Die Kapsel mit den Materialien wird dann in einer heissisostatischen Presse gesintert.

Dabei gewährleistet die Kapsel eine gasdichte Druckübertragung auf die in der Kapsel abgeschlossenen Materialien. Es ist von Vorteil, wenn der Druck auf die Kapsel mit einem inerten Gas ausgeübt wird. Die Kapsel wird aus Stahl der Qualität St37 oder einem anderen Stahl oder aus Glas oder einem ähnlichen Material hergestellt.

Der Verbundkörper wird in mehreren Schichten hergestellt, wobei der mehrschichtige Aufbau des Verbundkörpers mit vor- oder fertiggesinterten Presslingen erzielt wird.

Die Erfindung wird anhand von folgenden Beispielen erläutert.

Beispiel 1

Eine Stahlkapsel der Qualität St37 wurde lageweise, d.h. in übereinander gelegenen Lagen, mit
1. Stahl C45,
2. Hartmetall G6, Wolframkarbid = 73%, Kobalt = 27% und
3. Hartmetall G2, Wolframkarbid = 88%, Kobalt = 12%
gefüllt, gasdicht verschweisst und heissisostatisch gepresst. Die Ultraschallprüfung des so verbundenen Körpers ergab keine Fehlerechos. die metallografische Untersuchung zeigte eine einwandfreie Verbindung des Hartmetalls unter sich und des Hartmetalls mit dem Stahl. Risse oder Poren wurden keine festgestellt.

Beispiel 2

Eine Stahlkapsel der Qualität St37 wurde lageweise mit
1. Stahl C45,
2. Hartmetall G6, Wolframkarbid = 73%, Kobalt = 27%,
3. Hartmetall G4, Wolframkarbid = 80%, Kobalt = 20% und
4. Hartmetall G2, Wolframkarbid = 88%, Kobalt = 12%
gefüllt, gasdicht verschweisst (mit Laser, Elektronenstrahlen oder Plasma) und heissisostatisch gepresst. Die Ultraschallprüfung des so verbundenen Körpers ergab keine Fehlerechos. Die metallografische Untersuchung zeigte wiederum eine einwandfreie Verbindung des Hartmetalls unter sich und des Hartmetalls mit dem Stahl. Risse oder Poren wurden keine festgestellt.

Patentansprüche

1. Verfahren zur Herstellung eines mehrschichtigen Verbundkörpers, der einen Trägerteil, beispielsweise aus Stahl, und einen zweiten Teil aus Sinter-Hartmetall oder -Hartstoff umfasst, wonach der Trägerteil und der zweite Teil übereinander in einer gasdicht verschweissten Kapsel eingeschlossen werden und in einer heissisostatischen Presse bei einer Temperatur von mindestens 800°C und bei einem isostatischen Druck von mindestens 100 bar während mindestens 30 Minuten durch Diffusion zum Verbundkörper verschweisst werden, dadurch gekennzeichnet, dass mindestens eine Zwischenschicht zwischen den Trägerteil und den zweiten Teil eingelegt wird und dass die Zwischenschicht oder -schichten und der zweite Teil aus den gleichen Sinter-Hartmetallen oder -Hartstoffen zusammengesetzt sind, jedoch die Gehalte der verschiedenen Materialien, aus denen die genannten Sinter-Hartmetalle oder -Hartstoffe bestehen, so ausgewählt werden, dass eine Angleichung der Wärmedehnungskoeffizienten der Schichten vom Trägerteil aus zum zweiten Teil hin herbeigeführt wird.

2. Verfahren gemäss Anspruch 1, dadurch gekennzeichnet, dass bei mehreren Zwischenschichten, die unterschiedliche Gehalte an einem Metallkarbid und an einem Binder enthalten, die Gehalte an dem Binder vom Träger her zum zweiten Teil hin abnehmen.

3. Verfahren gemäss Anspruch 1 oder 2, dadurch gekennzeichnet, dass der Trägerteil aus einem Metall besteht, dessen Härte kleiner ist als diejenige des zweiten Teils.

4. Verfahren gemäss Anspruch 1, 2 oder 3, dadurch gekennzeichnet, dass der Verbundkörper ein Ventilstössel ist.

## Claims

1. Process for producing a multi-layer composite body comprising a carrier portion, e.g. of steel, and a second portion of sintered metal carbide or sintered hard solids, whereafter the cP and the second portion one upon the other are enclosed in a gas-tightly welded capsule and are welded into a composite body diffusion in a hot isostatic press at a temperature of at least 800°C and at an isostatic pressure of at least 100 bar for at least 30 minutes, characterized in that at least one intermediate layer is inserted between the carrier portion and the second portion, and that the intermediate layer or layers and the second portion are composed of the same sintered metal carbides or sintered hard solids, but the contents of the various materials of which the said sintered metal carbides or sintered hard solids consist are so chosen that a conformation of the coefficients of thermal expansion of the layers is brought about starting from the carrier portion towards the second portion.

2. Process according to claim 1, characterized in that in the case of several intermediate layers containing different contents of a metal carbide and a binder, the contents of the binder decrease starting from the carrier towards the second portion.

3. Process according to claim 1 or 2, characterized in that the carrier portion is made of a metal, the hardness of which is less than that of the second portion.

4. Process according to claim 1, 2 or 3, characterized in that the composite body is a valve tappet.

## Revendications

1. Procédé de fabrication d'un corps composé de plusieurs couches, qui comprend une partie porteuse, par exemple en acier, et une deuxième partie en alliage dur ou en carbure fritté, selon lequel la partie porteuse et la deuxième partie sont enfermées l'une par-dessus l'autre dans une coupole soudée, de manière étanche aux gaz, et sont soudées par diffusion en vue de l'obtention du corps composé dans une presse isostatique à haute température, à une température d'au moins 800°C et à une pression isostatique d'au moins 100 bar pendant au moins 30 minutes, caractérisé en ce qu'au moins une couche intermédiaire est insérée entre la partie porteuse et la deuxième partie, et en ce que la ou les couches intermédiaires et la deuxième partie sont composées des mêmes alliages durs ou carbures frittés, les teneurs des différents matériaux constituant lesdits alliages durs ou carbures frittés étant cependant choisies de telle sorte que soit occasionnée une égalisation des coefficients de dilatation thermique des couches à partir de la partie porteuse vers la deuxième partie.

2. Procédé selon la revendication 1, caractérisé en ce que, dans plusieurs couches intermédiaires qui contiennent différentes teneurs en un carbure de métal et en un liant, les teneurs en liant décroissent à partir du porteur vers la deuxième partie.

3. Procédé selon la revendication 1 ou 2, caractérisé en ce que la partie porteuse est constituée d'un métal dont la dureté est plus petite que celle de la deuxième partie.

4. Procédé selon la revendication 1, 2 ou 3, caractérisé en ce que le corps composé est une tige de soupape.